# EUROPEAN PATENT SPECIFICATION

(11) **EP 3 195 338 B1**
(45) Date of publication and mention of the grant of the patent: **04.12.2019**
(21) Application number: 15762668.0
(22) Date of filing: 02.09.2015
(51) Int. Cl.: H01H 9/10, H01H 85/02, H01H 89/00

(54) **CURRENT MANAGEMENT DEVICE**
STROMVERWALTUNGSVORRICHTUNG
DISPOSITIF DE GESTION DE COURANT

(30) Priority: 15.09.2014 GB 201416249
(43) Date of publication of application: 26.07.2017
(73) Proprietor: Schneider Electric Limited, Scarborough, Yorkshire YO11 3DA (GB)
(72) Inventor: MENNELL, Thomas, Scarborough Yorkshire YO11 3DA (GB); EVANS, Brian, Scarborough Yorkshire YO11 3DA (GB)
(74) Representative: Burton, Nick
(86) International application number: PCT/GB2015/052525
(87) International publication number: WO 2016/042290

(56) References cited:
- FR-A1- 2 967 832
- GB-A- 2 117 178
- US-A- 2 849 572
- US-A- 2 937 254
- US-A- 3 324 263
- US-A- 5 148 139
- US-A1- 2011 163 837
- US-A1- 2011 273 817

## Description

The present invention relates to a single phase current management device for use with a fuse unit of a low voltage distribution unit.

Low voltage distribution units distribute and deliver power at a low voltage, having been transformed, by means of a high voltage to low voltage transformer, from the high voltage at which the electricity is transmitted from the power generation source. The majority of electricity is consumed at low voltage i.e. 400V three phase and 230V single phase. The distribution units downstream of the transformer are sometimes referred to as fuse boards, fuse cabinets or feeder pillars, depending upon their particular use/location.

Conventionally low voltage distribution units comprise an incoming disconnector that isolates the power supply from the high to low voltage transformer, and a number of fused outgoing circuits that deliver power to the final user, or that are used as interconnectors to transfer power to sub-stations in the event of a transformer outage or similar. Each outgoing circuit is provided with a fused short-circuit protection and a manual means of isolating the circuit.

When a circuit has to be isolated, or a fuse replaced, for example following an overload or short-circuit, an operator has to visit the site and manually remove and/or replace the fuse carrier. The safe insertion and removal of the fuse is dependent on the skill or strength of the operator and their personal protective clothing.

Generally when a fuse operates due to overload or short-circuit, it is caused by a relatively small current and often the cause is difficult to identify. As a result a new fuse is often used without the original cause of malfunction being known. The cost of having an operator visit the site and replace the fuse can be costly.

Having the requirement of an operator travelling to a sub-station to replace the fuse and/or isolate energised circuits to restore supplies, takes time which, in the current commercial environment, is unsatisfactory for customers that expect security of supply or quick restoration of supply.

Historically, power has been generated at large centralised power stations, but there is increasing use of small embedded generation using, for example, small wind generators, or photo-voltaic generators which also supply electricity to the network. This impacts on electricity distribution management, as embedded generation can sometimes exceed the prescribed limit. Under these conditions a network operator may need to quickly and remotely disconnect embedded generation power supply if it exceeds certain limits.

The distribution units typically incorporates a fuse unit and four or five supply bus bars: one for each of the three phases of the incoming supply, and either a common neutral bar or separate earth and neutral bars.

Each three phase output taken from the supply has a power carrying cable connected to the bus bar of the respective phase by way of a fuse. Thus, three fuses are mounted together in a fuse unit (also referred to as a fuse way), one for each phase, and each fuse is designed to engage and bridge a pair of contacts, one electrically connected to the respective bus bar and the other to the respective output.

FR 2 967 832 A1 describes a device that has an integration or anchoring unit integrated on power supply bars of a panel. A connection unit i.e. screw, is located at an alignment end and connected on a conductor of a busbar connection line of the panel. The connection unit is extended by a line conductor accessible from housings of a cut-off apparatus. Measuring units are associated with the line conductor. An electronic module in the fourth housing receives information obtained from the measuring units and includes an information processing block. FR 2 967 832 A1 discloses a single phase current management device according to the preamble of claim 1.

US 2011/273817 A1 describes a remotely-controllable circuit breaker, including a first circuit breaking unit, remote control unit, and housing. The first circuit breaking unit and the remote control unit are disposed in the housing; the first circuit breaking unit operates to switch on or off loads and electric lines; the remote control unit operates to control the interruption of the remotely-controllable circuit breaker via a remote control signal; and the housing is made of insulating and flame-retardant materials.

According to the invention, there is provided a single phase current management device for use with a fuse unit of a low voltage distribution unit, the fuse unit having a pair of electrical contacts, the single-phase current management device comprising:
a switching device having at least one first terminal and at least one second terminal, the at least one first terminal and the at least one second terminal being connected by means of a circuit breaking mechanism, wherein the circuit breaking mechanism is configured to electrically connect and disconnect the at least one first terminal and the at least one second terminal; and
a coupling assembly connected to the switching device, the coupling assembly having:
   a current input contact electrically coupled to the at least one first terminal and configured to connect to a first contact of the pair of contacts of the fuse unit; and
   a current output contact electrically coupled to the at least one second terminal and configured to connect with a second contact of the pair of contacts of the fuse unit, for defining a current flow path from the current input contact to the current output contact through the switching device; and
   a tightening mechanism to tighten the connections between current input contact and the current output contact and respective first and second contacts of the pair of contacts of the fuse unit.

When the first contact of the pair of contacts and the second contact of the pair of contacts connect with the respective current input contact and the current output contact then current is able to flow from the first contact of the pair of contacts through the current management device to the second contact of the pair of contacts.

The coupling assembly may further comprise a component holder arranged within the current flow path between current input contact and at least one first terminal for holding an electrical conducting component therein, such that current may flow from the current input contact through the component to the switching device via the at least one first terminal when the electrically conducting component is held therein.

The component may be a fuse or an electrically-conducting connector.

The coupling assembly may further include a first switching device contact connected to the at least one first terminal and a second switching device contact connected to the at least one second terminal, such that the current input contact, the current output contact, the at least one first and second terminals, and the first and second switching device contacts form the current flow path from the current input contact to the current output contact through the switching device.

The current flow path may comprise a first path portion between the current input contact and the first switching device contact, a second path portion between the first and second switching device contacts through the switching device, and a third path portion between the second switching device contact and the current output contact, the electrically conducting component being provided within the first current flow path portion.

The current input contact may comprises a Y-shaped plate having a recess into which the first contact of the pair of contacts can be received and a plate configured for connection to a terminal of the electrically conducting component.

The first switching device contact may comprise a bracket having a plate configured for connection to a second terminal of the electrically conducting component and a flange connected to the at least one first terminal. The flange may be connected to the at least one first terminal by a first intermediate contact.

The current output contact may comprises a pair of plates defining a recess therebetween and into which the second contact of the pair of contacts can be received.

The second switching device contact may be a plate connected to the pair of plates. The plate may be connected to the at least one second terminal by a second intermediate contact.

The coupling assembly includes an insulator board which isolates the first and third current path portions.

The tightening mechanism may comprise a plurality of worm drive assemblies.

The switching device may be a three-pole low-voltage circuit breaker configured to operate at up to 1000V.

The three-pole low voltage circuit breaker may have three first and second terminals, one for each pole.

The switching device may include an actuator configured actuate the circuit breaking mechanism.

The switching device may be configured to receive a remote control signal from a remote control system, the actuator being arranged to actuate the circuit breaking mechanism in response to the remote control signal.

The switching device may include a current monitoring unit configured to monitor the current flow in the switching device and to transmit data indicative of the measured load to a remote device by means of a data link to the remote control system.

The switching device may further include a control module configured to provide a signal to the actuator to control the actuator in response to the remote control signal from the remote control system.

The control module may be configured to initiate current management in response in response to a second control signal from the remote control system.

A current management device according to embodiments of the present invention can provide a number of advantages over the current fuse devices used.

In embodiments in which the switching device can be operated remotely, the current management device of the present invention may provide a remotely operated device that can be installed in the space of a conventional fuse.

This reduces supply management time as it can be reset remotely. The provision of a fuse in series increases high current breaking capability.

Dependent on the situation, the current management device can be permanently installed or can be installed for a short period of time to assist in maintain supplies until a fault is located.

Down time is minimised in a conventionally managed network and facilitates migration to a smart network, and there is increased operator safety through manually independent and/or remote switching. In addition, it can be installed on a selective basis in existing or new equipment.

Embodiments of the invention will now be described by way of example only with reference to the accompanying drawings of which:
Figure 1 is a perspective view of a fuse unit incorporating a current management device of the invention;
Figure 2 is a circuit diagram of a distribution cabinet incorporating a plurality of fuse units;

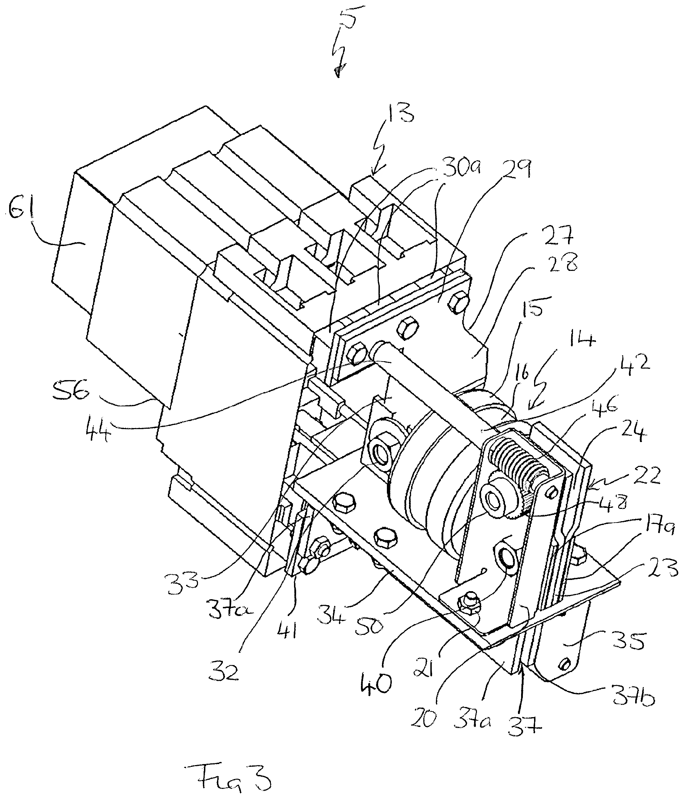

Figure 3 is a first perspective view of the current management device in Figure 1;

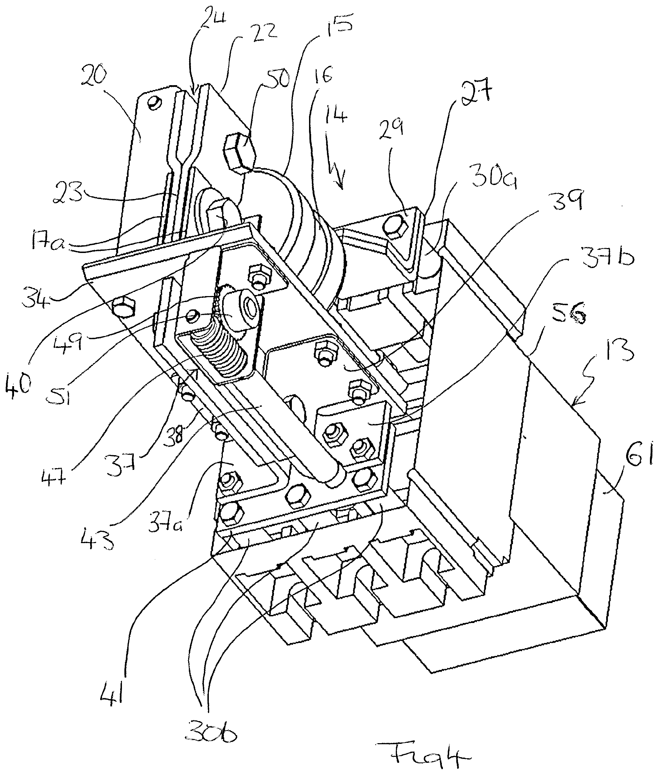

Figure 4 is a second perspective view of the current management device of Figure 3;

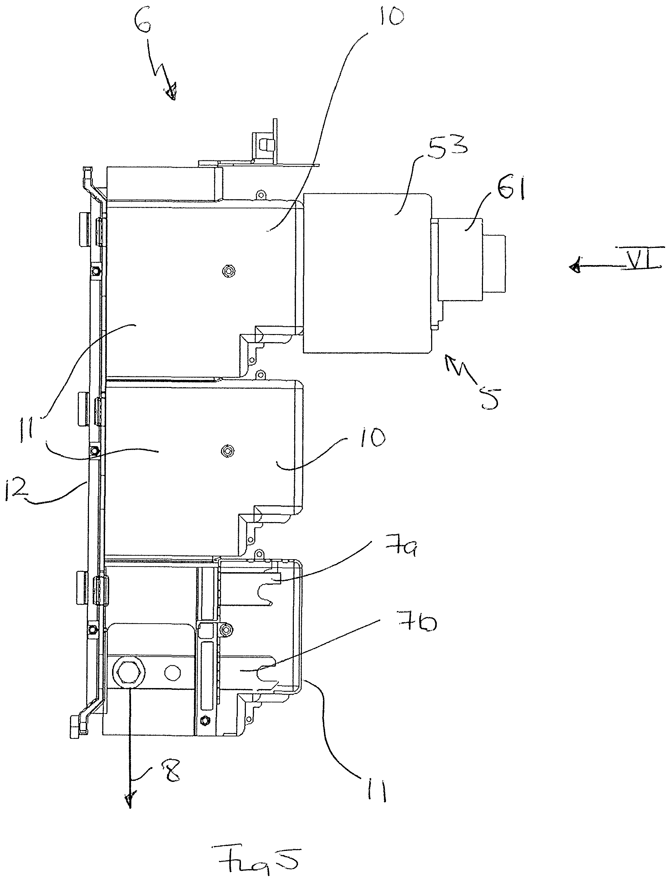

Figure 5 is a side view of the fuse unit of Figure 1;
Figure 6 is a front view of the fuse unit of Figure 1 in the direction of arrow VI of Figure 5

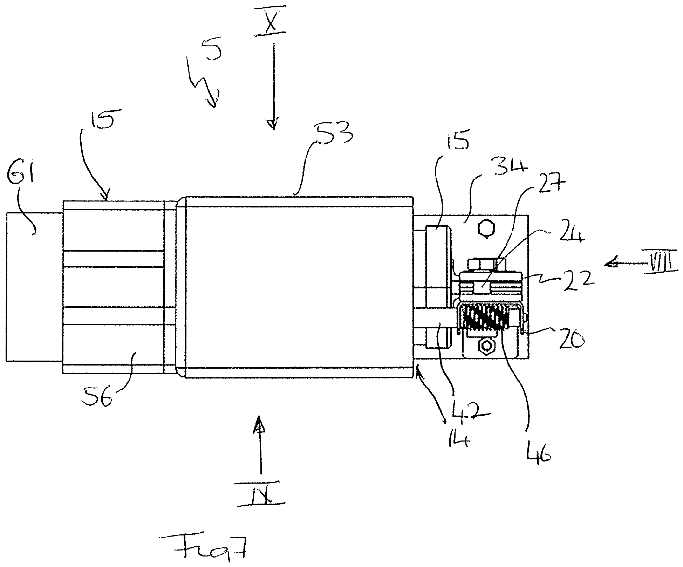

Figure 7 is a plan view of the current management device of the invention;

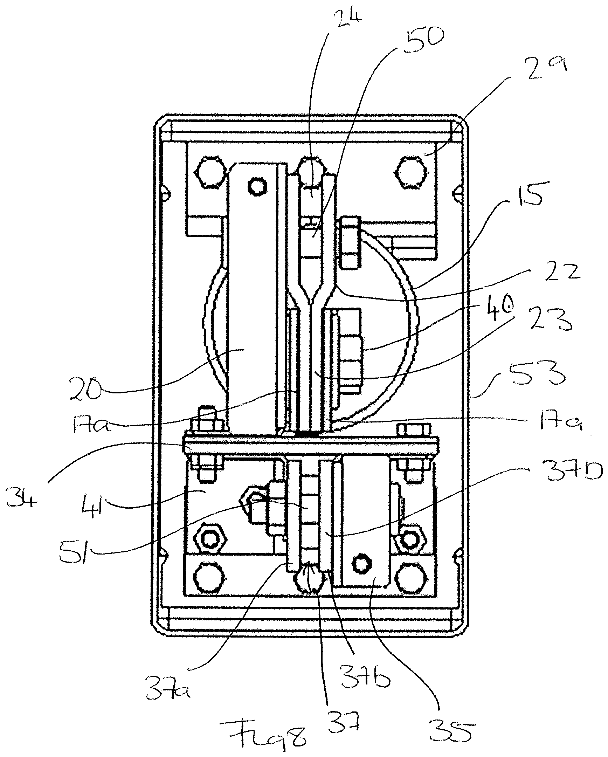

Figure 8 is a rear view in the direction of arrow VIII in Figure 7;

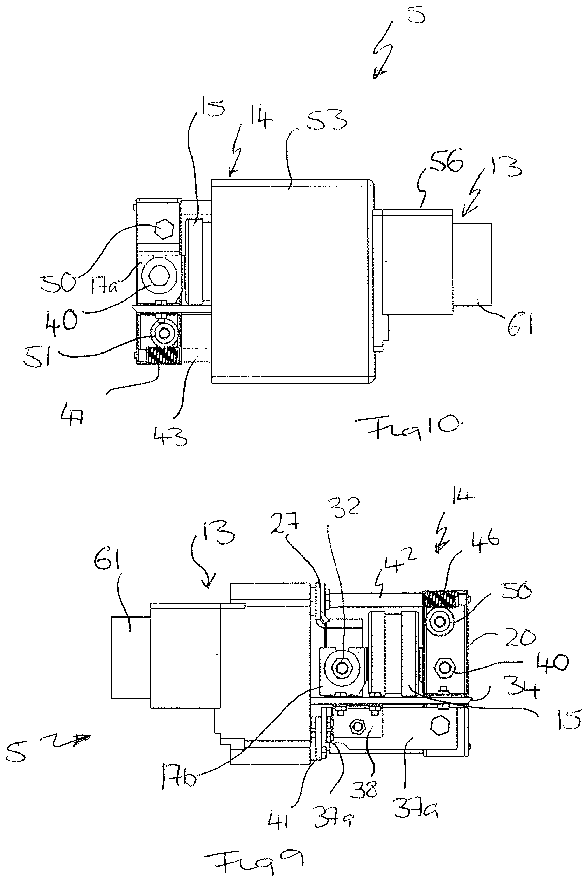

Figure 9 is a side view in the direction of arrow IX in Figure 7, but with the shroud removed;
Figure 10 is a side view in the direction of X in Figure 7;

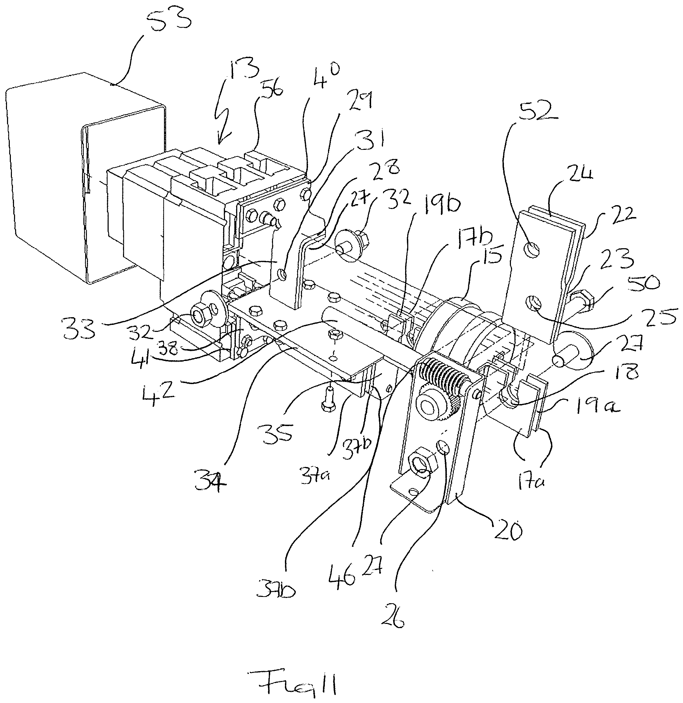

Figure 11 is an exploded perspective view of the current management device of Figures 3 and 4;
Figure 12 is a schematic cross section illustrating the current flow path through the current management device; and
Figure 13 is a schematic block and circuit diagram of the circuit breaker of the current management device of Figure 3.

In an electricity transmission and distribution network, generated electricity is transmitted as a three-phase supply at high voltage along transmission lines. To distribute the power supply to consumers at a local level, the high voltage power supply is transformed to a low voltage.

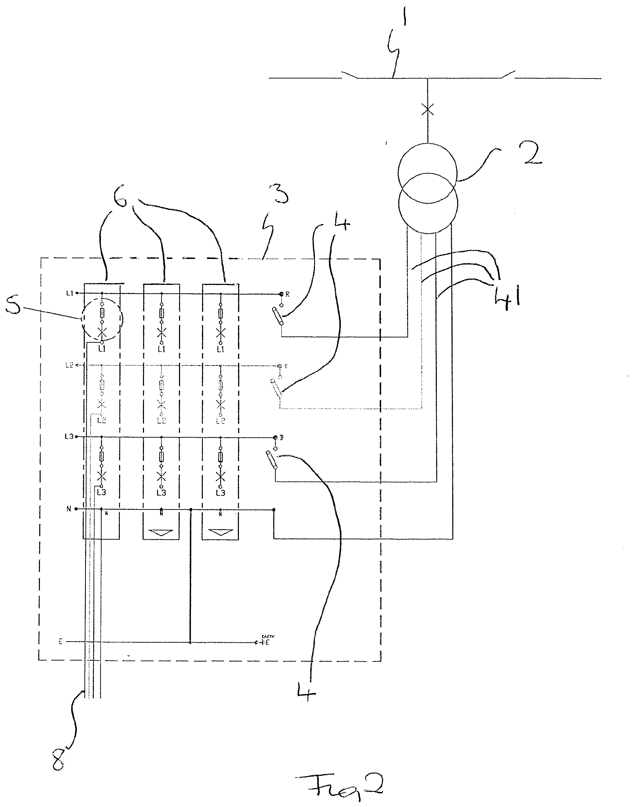

Figure 2 is a simple circuit diagram schematically illustrating the distribution of power to consumers. A high voltage power supply on a ring main 1 is supplied to a distribution transformer 2 which transforms the supply to a low voltage.

The output from the distribution transformer 2 is fed to a distribution unit 3 - the output includes three single-phase outputs and a neutral line.

The distribution unit 3 includes four supply bus bars L1, L2, L3, N: one for each of the three phases L1, L2, L3 and a common neutral bar N which is normally connected to earth.

Each three phase output taken from the supply has a power carrying connection 41 to the supply bus bar L1, L2, L3 by means of a disconnector 4.

A plurality of fuse units 6 are connected to the supply bus bars L1, L2, L3. Each fuse unit 6 includes three circuit management devices, one for each of the supply bus bars L1, L2, L3. In Figure 2, three such fuse units 6 are shown. For clarity, only one output 8 is shown.

The three circuit management devices 5 are mounted together in a fuse unit 6 (also referred to as a fuse way), one for each phase, and each circuit management device 5 is designed to engage and bridge a pair of contacts (7a, 7b) provided on the fuse unit 6. One of the contacts 7a is electrically connected to the respective bus bar L1, L2, L3 and the other 7b to the respective output 8.

The output 8 supplies power to the relevant external customer equipment.

Conventionally, the fuse units 6 are arranged in a vertical orientation within the distribution unit 3, for example mounted on a back wall of the distribution unit 3. Other orientations are possible.

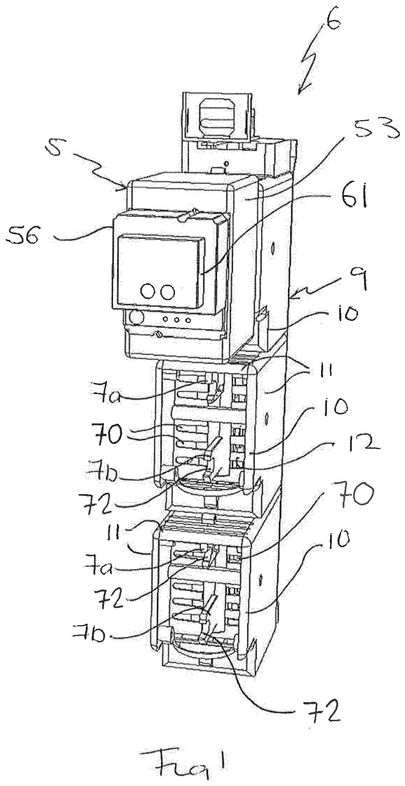

A fuse unit 6 incorporating a current management device 5 of the present invention is illustrated in Figure 1.

The fuse unit 6 comprises a sub-assembly 9 which further comprises three rectangular-shaped housings 10, each housing 10 comprising four sides 11 and a back wall 12. The back wall 12 has a grid-like structure with a plurality of apertures 70 to provide ventilation to reduce overheating.

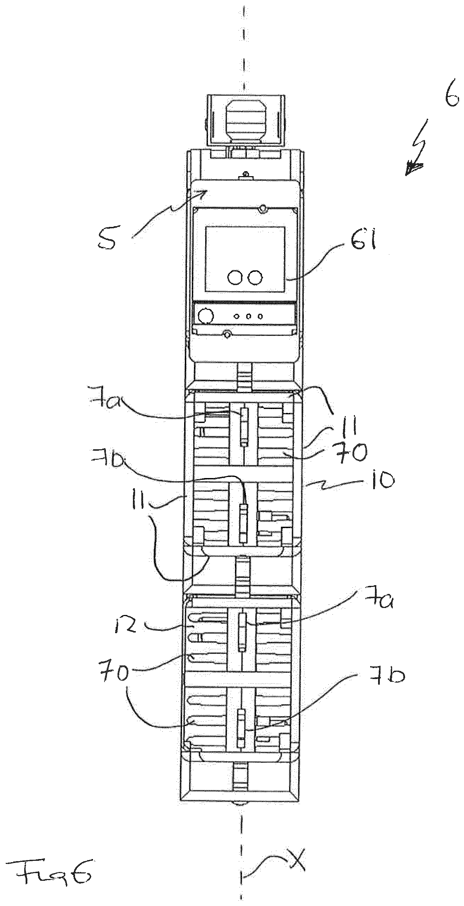

In each housing 10, two contacts 7a, 7b extend from the back wall 12. The contacts 7a, 7b are flat pins oriented co-linearly along a longitudinal axis X of the fuse unit 6 - see Figure 6. Each contact 7a, 7b has a curved opening 72 at its distal end for engaging with a respective current management device 5 as will be described in further detail below. One contact 7a is connected to the respective bus bar L1, L2, L3 as described above and the second to the output 8.

The fuse unit 6 is made from a combination of materials, predominantly glass reinforced polyester resin, polycarbonate, and tin plated copper for those sections required to be electrically conductive. In this respect the fuse unit is identical to the fuse unit 6 manufactured and sold by Schneider Electric Limited under the trade name Shielded Fusegear™.

Each housing 10 is designed to engage with respective connection means in a current management device 5 which can be inserted into the housings 10. Figure 1 shows the current management device 5 placed in one of the housings 10, with two of the housings 10 without current management devices 5 in place. This is done for clarity and to show the details of the sub-assembly 9 described above.

Each current management device 5 comprises a switching device, in the form of a circuit breaker 13, and a coupling assembly 14 for coupling the switching device to the contacts 7a, 7b of the fuse unit 6.

The coupling assembly 14 also provides a housing for a fuse 15, and provides electrical coupling between the fuse 15 and the respective connections in the circuit breaker 13 and the contacts 7a, 7b to establish a current path as will be described further below. The fuse 15 is detachable and removable from the coupling assembly 14 so that it can be replaced, as required.

The circuit breaker 13 includes a housing 56 which includes relevant electrical and electronic circuitry for operation of the circuit breaker 13, as is known to persons skilled in the art, as well as software and firmware for control and monitoring as will be described below.

The fuse 15 can be any suitable fuse such as one manufactured by Eaton under the trade make Bussmann®.

Typically, the fuse 15 has a rating of between 400A and 800A.

The fuse 15, in this embodiment, comprises a cylindrical fuse body 16 with first and second paired terminals 17a, 17b in the form of flat plates with curved recesses 18. Each of the first and second paired terminals 17a, 17b define a respective gap 19a, 19b between them.

The coupling assembly 14 includes an insulated board 34 upon which the fuse 15 is mounted by means of brackets 20, 27 as will be described in further detail below.

A first support bracket 20 is mounted on one end of the insulated board 34 by means of a nut and bolt arrangement 21. The first support bracket 20 has an aperture 26 configured to align with the curved recess 18 of one of the paired terminals 17 of the fuse 15. A Y-shaped contact member 22, comprising a retention plate 23 and defining a contact recess 24, is in connection with the first of the paired terminals 17a.

The retention plate 23 also has an aperture 25 which is configured to align with both the aperture 26 of the first support bracket 20 and the curved recesses 18 of the first of the paired fuse terminals 17a. The retention plate 23, inserted into the gap 19a between the first of the paired fuse terminals 17a, and the first of the paired fuse terminals 17a, the Y-shaped contact member 22, and the first support bracket 20 are arranged contiguously so that a nut and bolt 40 can be inserted through the aligned apertures 25, 26 and curved recesses 18 and tightened so as to secure them together thus securing a first end of the fuse 15 in the fuse assembly 14.

A second support bracket 27 comprises an L-shaped portion 28 and a flange 29. The flange 29 engages with first intermediate contacts 30a providing electrical connections to the internal circuitry of the circuit breaker 13 via first terminals 58 in the circuit breaker 13. The second support bracket 27 also serves to secure the coupling assembly 14 to the housing 56 of the switching device 13.

For ease of manufacture, the second support bracket 27 is made from two matching contiguous portions, but could also be made as a single piece.

The L-shaped portion 28 has an elongate section 33 with an aperture 31 which is configured to be received in the gap 19b between the second of the paired fuse terminals 17b. A nut and bolt 32 is used to secure to secure the elongate section 33 into the gap 19b by inserting the nut and bolt 32 into the aperture 31 and through the curved recesses 18 of the paired fuse terminals 17b and tightening.

On the other, underneath, side of the insulated board 34 there is provided a third support bracket 35 secured to the underside of the insulated board 34. The third support bracket 35 includes an aperture 36. A pair of L-shaped connection plates 37a, 37b are arranged adjacent the third support bracket 35 and define an elongate recess 37. The L-shaped connection plates 37a, 37b are secured to the underside of the insulated board 34 by means of further brackets 38, 39 and are also secured to a connection plate 41 which engages with second intermediate contacts 30b providing electrical connections to the internal circuitry of the circuit breaker 13 via second terminals 60 in the circuit breaker 13.

The coupling assembly 14 is provided with two tightening mechanisms 42, 43. Each are substantially identical in operation. The tightening mechanisms 42, 43 comprise a shaft 44, 45 which has a worm drive comprising a respective worm 46, 47 which engages with a gear 48, 49 provided on a respective bolt 50, 51. The bolts 50, 51 are inserted through respective aligned apertures 52 in the Y-shaped contact member 22 and the L-shaped connection plates 37a, 37b. The shafts 44, 45 are encased in tubes of insulating material (not shown).

The shafts 44, 45 extend to bores provided within the housing 56 of the circuit breaker 13 and can be accessed by means of a tightening tool (not shown) which engages with the shaft 44, 45 and is able to rotate it. Rotation of the respective shaft 44, 45 causes the respective worm 48, 49 to turn on the respective bolt 50, 51 which, in turn rotates to grip respective contacts 7a, 7b in the recess 24, 37.

The coupling assembly 14 is encased within a shroud 53. The shroud 53 is made of any suitable insulating material. The shroud 53 encases and protects the coupling assembly 14.

The circuit breaker 13 is an electro-mechanical circuit breaker with solid state protection. Electro-mechanical circuit breakers with solid state protection are known in the art and need not be described in any further detail herein, except as is relevant to the present invention.

In the embodiment described herein, the circuit breaker is a three pole circuit breaker which includes three first terminals 58 and three second terminals 60.

The three first terminals 58 are electrically coupled to the second support bracket 27 at the flange 29 by means of the first intermediate contacts 30a, and the three second terminal 60 are electrically coupled to the connection plate 41, and L-shaped connection plates 37a, 37b, by means of the second intermediate contacts 30b respectively.

Each of the three first terminals 58 is connected to a respective one of the three second terminals 58 via a circuit breaking mechanism 59. Each circuit breaking mechanism 59 comprises first and second contacts that are moveable between a closed position, which enables current to flow between the first terminal 58 and the second terminal 60, and an open position in which the current flow is interrupted.

An actuator mechanism is used to move the first and second contacts between the closed position and the open position. The actuator mechanism includes a lever 54 for manual actuation of the first and second contacts between the open and closed positions. The actuator mechanism is also configured for remote actuation under control of a motor mechanism 61.

The circuit breaker 13 includes a breaker status and control module 62 which is connected to the motor mechanism 61 to provide control signals to the motor mechanism 61 to control the opening and closing of the first and second contacts by means of the actuator mechanism.

The circuit breaker 13 also includes a protection and monitoring unit 63. The protection and monitoring unit 63 measures the energy passing through the circuit breaker 13. If the current is too high for too long it will trip the circuit breaker 13 by activating the circuit breaker mechanism 59. The protection and monitoring unit 63 also measures power, current, volts, power factor, etc. and displays them locally or remotely via a remote supervisory control and data acquisition (SCADA) system. SCADA systems are known in the art and provide remote control and data acquisition functionality in process and systems control and, as such, need not be described in any further detail herein.
The breaker status and control module 62 is coupled to a remote interface 64 and from there to the SCADA system.

For remote actuation, the motor mechanism 61 is configured to receive control signals from the SCADA system which control the motor mechanism 61 so as to open and close the first and second contacts. In this way, a remote operator is able to selectively open and close current pathways through the fuse units 6. The SCADA system is able to remotely control the motor mechanism 61 and is also able to acquire additional data about the operation of the network through the protection and monitoring unit 63.

This operation of a circuit breaker is known to persons skilled in the art and need not be described in any further detail herein except as is relevant to the present invention.

The support brackets 20, 27, 35, the connection plate 41, the Y-shaped contact member 22 and the L-shaped connection plates 37a, 37b as well as the bolts connecting the plates are all made of electrically-conductive material.

The Y-shaped contact member 22 acts as a current input contact for the current management device 5 and the pair of L-shaped connection plates 37a, 37b act as a current output contact for the current management device 5. The flange 29 of the second support bracket 27, and the first intermediate contacts 30a, act as a first switching device contact, and the connection plate 41 and respective second intermediate contacts 30b act as a second switching device contact for the current management device 5.

The first bracket 20, Y-shaped contact member 22, and the elongate section 33 of the second support bracket 27 act as a component holder, for holding the fuse 15 in place in the coupling assembly 14.

The Y-shaped contact member 22, fuse 15, second support bracket 27, contacts 30a, the internal circuitry of the circuit breaker 13, the second intermediate contacts 30b, the connection plate 41, and the L-shaped connection plates 37a, 37b define a current flow path 57 through the current management device 5.

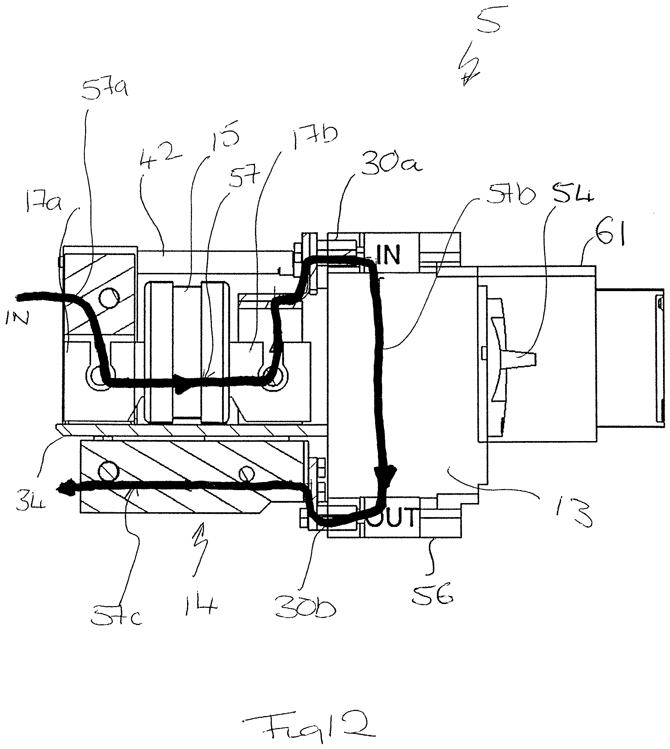

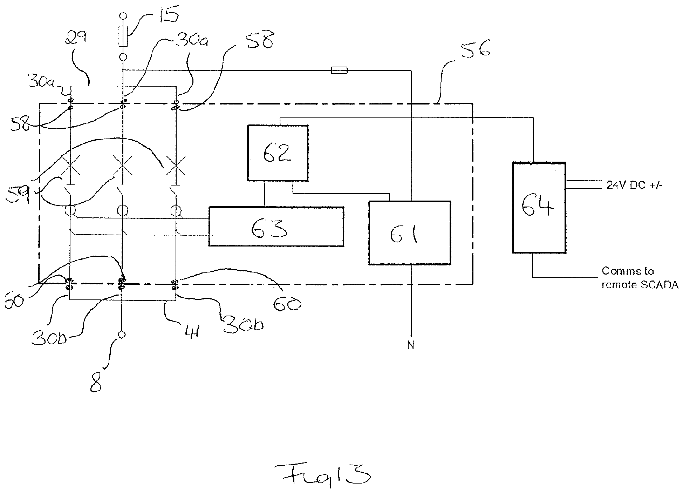

This is illustrated in Figure 12. The current flow path 57 can be divided into a first portion 57a comprising the Y-shaped contact member 22, fuse 15, second support bracket 27, and first intermediate contacts 30a, a second portion 57b through the circuit breaker 13 as described above in relation to Figure 13, and a third portion 57c comprising the second intermediate contacts 30b, the connection plate 41, and the L-shaped connection plates 37a, 37b. The first portion 57a and the third portion 57c are isolated by means of the insulation board 34.

When inserted into a housing 10 of the fuse unit 6, the current management device 5 contacts the pair of contacts 7a, 7b. Specifically, the first contact 7a of the pair of contacts is received into the contact recess 24 of the Y-shaped contact member 22 and the curved opening 72 of the first contact 7a engages around the shaft of the bolt 50. This provides an electrical connection between the first contact of the pair of contacts 7a and the Y-shaped contact member 22.

The second contact 7b of the pair of contacts is received in the elongate recess 37 under the insulation board 34 and around the shaft of the bolt 51. This provides electrical connection between the second contact 7b and the L-shaped connection plates 37a, 37.

In this way, current flows from the bus bar L1, L2, L3 via the first contact 7a of the pair of contacts to the Y-shaped contact member 22, and along the first portion 57a of the electrically conducting path 57 via the fuse 15, the second support bracket 27 (through the elongate portion 33 and the flange 29) and first intermediate contacts 30a, to the second portion 57b of the electrically conducting path provided by the internal circuitry of the circuit breaker 13, via first terminal 55 in the circuit breaker 13. Current flows through internal circuitry of the circuit breaker 13 to the second terminal 56 - providing the contacts in the current breaking mechanism 59 are closed - to the second intermediate contacts 30b, the connection plate 41, and the L-shaped connection plates 37a, 37b that define the third portion 57c of the current flow path 57, to the second contact 7b of the pair of contacts and on to the output 8.

The circuit breaker 13 is configured to detect fault events in the current flow and respond to these faults by interrupting the current flow by forcing the contacts of the circuit breaking mechanism 59 to the open position. In this way, the circuit breaker 13 interrupts supply without the fuse 'blowing. The circuit breaker 13 can be rest by operating the lever 54 from a remote location such as the SCADA system. Alternatively the lever 54 can be manually set.

If the fault gives rise to a large current surge, the fuse 15 will 'blow' thus protecting the circuit breaker 13 from damage in response to this large current surge.

To isolate or interrupt current flow to a particular output 8, a control signal can be sent via the remote connection as part of a SCADA system to actuate the respective lever 54 using the motor mechanism 61.

In an alternative embodiment, the current management device 5 is configured without a fuse 15. In this embodiment, an electrically conducting connector (not shown) replaces the fuse 15 and is placed in the first portion 57a of the current flow path 57 between the Y-shaped contact member 22 and the elongate section 33, 33' of the second support bracket 27.

The fuse 15 or the connector can be removed by removing the nuts and bolts from the respective apertures so that the fuse 15 can be removed from engagement with the support brackets 20, 27 and the Y-shaped contact member 22 and an electrically conducting connector or another fuse inserted as required.

Variations of the current management device 5 are possible within the scope of the present invention.

The current management device can also be provided with a housing that can enable the current management device to be used, with particular fuse units, such as that manufactured and supplied under the trade name SAIF™ by Schneider Electric Ltd.

## Claims

1. A single phase current management device (5) for use with a fuse unit of a low voltage distribution unit (3), the fuse unit (6) having a pair of electrical contacts, the single-phase current management device comprising:
a switching device (13) having at least one first terminal (58) and at least one second terminal (60), the at least one first terminal and the at least one second terminal being connected by means of a circuit breaking mechanism (59), wherein the circuit breaking mechanism is configured to electrically connect and disconnect the at least one first terminal and the at least one second terminal; and
a coupling assembly (14) connected to the switching device, the coupling assembly having:
a current input contact (22) electrically coupled to the at least one first terminal and configured to connect to a first contact (7a) of the pair of contacts of the fuse unit; and
a current output contact (37a, 37b) electrically coupled to the at least one second terminal and configured to connect with a second contact (7b) of the pair of contacts of the fuse unit, for defining a current flow path from the current input contact to the current output contact
through the switching device;
**characterised in that** the single phase current management device further comprises a tightening mechanism (42, 43) to tighten the connections between the current input contact (22) and the current output contact (37a, 37b) and respective first and second contacts of the pair of contacts of the fuse unit.

2. A single phase current management device according to claim 1, wherein the coupling assembly further comprises a component holder (20, 22, 33) arranged within the current flow path between current input contact and the at least one first terminal for holding an electrical conducting component (15) therein, such that current may flow from the current input contact through the component to the switching device via the at least one first terminal when the electrically conducting component is held therein.

3. A single phase current management device according to claim 1 or claim 2, wherein the coupling assembly further includes a first switching device contact (29, 30a) connected to the at least one first terminal and a second switching device contact (41, 30b) connected to the at least one second terminal, such that the current input contact, the current output contact, the at least one first and second terminals, and the first and second switching device contacts form the current flow path from the current input contact to the current output contact through the switching device.

4. A single phase current management device according to any preceding claim, wherein the current flow path comprises a first path portion (57a) between the current input contact and the first switching device contact, a second path portion (57b) between the first and second switching device contacts through the switching device, and a third path portion (57c) between the second switching device contact and the current output contact, the electrically conducting component being provided within the first current flow path portion.

5. A single phase current management device according to claim 4, wherein the coupling assembly includes an insulator board (34) which isolates the first and third current path portions.

6. A single phase current management device according to any preceding claim, wherein the current input contact comprises a Y-shaped plate (22) having a recess (24) into which the first contact of the pair of contacts can be received and a plate configured for connection to a terminal of the electrically conducting component.

7. A single phase current management device according to any of claims 3 to 5, wherein the first switching device contact comprises a bracket having a plate configured for connection to a second terminal of the electrically conducting component and a flange connected to the at least one first terminal.

8. A single phase current management device according to any preceding claim, wherein the current output contact comprises a pair of plates (37a, 37b) defining a recess (37) therebetween and into which the second contact of the pair of contacts can be received.

9. A single phase current management device according to any of claims 3 to 7, wherein the second switching device contact comprises a plate (41) connected to the pair of plates, the plate being connected to the at least one second terminal by a second intermediate contact (30b).

10. A single phase current management device according to any preceding claim, wherein the tightening mechanism includes a worm drive assembly.

11. A single phase current management device according to any preceding claim, wherein the switching device includes an actuator configured actuate the circuit breaking mechanism, and the switching device is configured to receive a remote control signal from a remote control system, the actuator being arranged to actuate the circuit breaking mechanism in response to the remote control signal.

12. A single-phase current management device according to any preceding claim, wherein the switching device further includes a control module (62) configured to provide a signal to the actuator to control the actuator in response to the remote control signal from the remote control system.

13. A single phase current management device according to claim 12, wherein the control module is configured to initiate current management in response in response to a second control signal from the remote control system.

14. A single phase current management device according to claim 12 or claim 13, wherein the switching device includes a current monitoring unit (63) configured to monitor the current flow in the switching device and to transmit data indicative of the measured load to a remote device by means of a data link to the remote control system.

## Patentansprüche

1. Einphasenstromverwaltungsvorrichtung (5) zur Verwendung mit einer Sicherungseinheit einer Niederspannungsverteilungseinheit (3), wobei die Sicherungseinheit (6) ein Paar von elektrischen Kontakten aufweist, wobei die Einphasenstromverwaltungsvorrichtung umfasst:
eine Schaltvorrichtung (13), welche mindestens einen ersten Anschluss (58) und mindestens einen zweiten Anschluss (60) aufweist, wobei der mindestens eine erste Anschluss und der mindestens eine zweite Anschluss mittels eines Ausschaltmechanismus (59) verbunden sind, wobei der Ausschaltmechanismus ausgestaltet ist, den mindestens einen ersten Anschluss und den mindestens einen zweiten Anschluss elektrisch zu verbinden und zu trennen; und
eine Koppelanordnung (14), welche mit der Schaltvorrichtung verbunden ist, wobei die Koppelanordnung aufweist:
einen Stromeingangskontakt (22), welcher mit dem mindestens einen ersten Anschluss elektrisch gekoppelt ist und ausgestaltet ist, mit einem ersten Kontakt (7a) des Paares von Kontakten der Sicherungseinheit verbunden zu sein; und
einen Stromausgangskontakt (37a, 37b), welcher mit dem mindestens einen zweiten Anschluss elektrisch gekoppelt ist und ausgestaltet ist, mit einem zweiten Kontakt (7b) des Paares von Kontakten der Sicherungseinheit verbunden zu sein, um einen Stromflusspfad von dem Stromeingangskontakt zu dem Stromausgangskontakt durch die Schaltvorrichtung zu definieren;
**dadurch gekennzeichnet, dass** die Einphasenstromverwaltungsvorrichtung ferner einen Befestigungsmechanismus (42, 43) umfasst, um die Verbindungen zwischen dem Stromeingangskontakt (22) und dem Stromausgangskontakt (37a, 37b) und entsprechenden ersten und zweiten Kontakten des Paares von Kontakten der Sicherungseinheit zu befestigen.

2. Einphasenstromverwaltungsvorrichtung nach Anspruch 1, wobei die Koppelanordnung ferner einen Komponentenhalter (20, 22, 33) umfasst, welcher in dem Stromflusspfad zwischen dem Stromeingangskontakt und dem mindestens einen ersten Anschluss zum Halten einer elektrisch leitenden Komponente (15) darin angeordnet ist, sodass ein Strom von dem Stromeingangskontakt durch die Komponente zu der Schaltvorrichtung über den mindestens einen ersten Anschluss fließen kann, wenn die elektrisch leitende Komponente darin gehalten wird.

3. Einphasenstromverwaltungsvorrichtung nach Anspruch 1 oder Anspruch 2, wobei die Koppelanordnung ferner einen ersten Schaltvorrichtungskontakt (29, 30a), welcher mit dem mindestens einen ersten Anschluss verbunden ist, und einen zweiten Schaltvorrichtungskontakt (41, 30b), welcher mit dem mindestens einen zweiten Anschluss verbunden ist, aufweist, sodass der Stromeingangskontakt, der Stromausgangskontakt, der mindestens eine erste und zweite Anschluss, und der erste und zweite Schaltvorrichtungskontakt den Stromflusspfad von dem Stromeingangskontakt zu dem Stromausgangskontakt durch die Schaltvorrichtung ausbilden.

4. Einphasenstromverwaltungsvorrichtung nach einem der vorhergehenden Ansprüche, wobei der Stromflusspfad einen ersten Pfadabschnitt (57a) zwischen dem Stromeingangskontakt und dem ersten Schaltvorrichtungskontakt, einen zweiten Pfadabschnitt (57b) zwischen dem ersten und zweiten Schaltvorrichtungskontakt durch die Schaltvorrichtung, und einen dritten Pfadabschnitt (57c) zwischen dem zweiten Schaltvorrichtungskontakt und dem Stromausgangskontakt umfasst, wobei die elektrisch leitende Komponente in dem ersten Stromflusspfadabschnitt vorgesehen ist.

5. Einphasenstromverwaltungsvorrichtung nach Anspruch 4, wobei die Koppelanordnung eine Isolierplatte (34) aufweist, welche den ersten und dritten Strompfadabschnitt isoliert.

6. Einphasenstromverwaltungsvorrichtung nach einem der vorhergehenden Ansprüche, wobei der Stromeingangskontakt eine Y-förmige Platte (22), welche eine Aussparung (24) aufweist, in welche der erste Kontakt des Paares von Kontakten aufgenommen werden kann, und eine Platte, welche für eine Verbindung mit einem Anschluss der elektrisch leitenden Komponente ausgestaltet ist, umfasst.

7. Einphasenstromverwaltungsvorrichtung nach einem der Ansprüche 3 bis 5, wobei der erste Schaltvorrichtungskontakt eine Halterung mit einer Platte, welche für eine Verbindung mit einem zweiten Anschluss der elektrisch leitenden Komponente ausgestaltet ist, und eine Flansch, welcher mit dem mindestens einen ersten Anschluss verbunden ist, umfasst.

8. Einphasenstromverwaltungsvorrichtung nach einem der vorhergehenden Ansprüche, wobei der Stromausgangskontakt ein paar von Platten (37a, 37b) umfasst, welche eine Aussparung (37) dazwischen definieren und in welche der zweite Kontakt des Paares von Kontakten aufgenommen werden kann.

9. Einphasenstromverwaltungsvorrichtung nach einem der Ansprüche 3 bis 7, wobei der zweite Schaltvorrichtungskontakt eine Platte (41) umfasst, welche mit dem Paar von Platten verbunden ist, wobei die Platte mit dem mindestens einen zweiten Anschluss mittels eines zweiten Zwischenkontakts (30b) verbunden ist.

10. Einphasenstromverwaltungsvorrichtung nach einem der vorhergehenden Ansprüche, wobei der Befestigungsmechanismus eine Schneckenantriebanordnung aufweist.

11. Einphasenstromverwaltungsvorrichtung nach einem der vorhergehenden Ansprüche, wobei die Schaltvorrichtung einen Aktuator aufweist, welcher ausgestaltet ist, den Ausschaltmechanismus zu betätigen, und die Schaltvorrichtung ausgestaltet ist, ein entferntes Steuersignal von einem entfernten Steuersystem zu empfangen, wobei der Aktuator ausgestaltet ist, den Ausschaltmechanismus abhängig von dem entfernten Steuersignal zu betätigen.

12. Einphasenstromverwaltungsvorrichtung nach einem der vorhergehenden Ansprüche, wobei die Schaltvorrichtung ferner ein Steuermodul (62) aufweist, welches ausgestaltet ist, ein Signal für den Aktuator bereitzustellen, um den Aktuator abhängig von dem entfernten Steuersignal von dem entfernten Steuersystem zu steuern.

13. Einphasenstromverwaltungsvorrichtung nach Anspruch 12, wobei das Steuermodul ausgestaltet ist, eine Stromverwaltung abhängig von einem zweiten Steuersignal von dem entfernten Steuersystem einzuleiten.

14. Einphasenstromverwaltungsvorrichtung nach Anspruch 12 oder Anspruch 13, wobei die Schaltvorrichtung eine Stromüberwachungseinheit (63) aufweist, welche ausgestaltet ist, den Stromfluss in der Schaltvorrichtung zu überwachen und Daten, welche die gemessene Last zu einer entfernten Vorrichtung anzeigen, mittels einer Datenverbindung zu dem entfernten Steuersystem zu übertragen.

## Revendications

1. Dispositif de gestion de courant monophasé (5) pour une utilisation avec une unité de fusible d'une unité de distribution à basse tension (3), l'unité de fusible (6) ayant une paire de contacts électriques, le dispositif de gestion de courant monophasé comprenant :
un dispositif de commutation (13) ayant au moins une première borne (58) et au moins une deuxième borne (60), l'au moins une première borne et l'au moins une deuxième borne étant connectées au moyen d'un mécanisme de disjonction de circuit (59), dans lequel le mécanisme de disjonction de circuit est configuré pour connecter et déconnecter électriquement l'au moins une première borne et l'au moins une deuxième borne ; et
un ensemble de couplage (14) connecté au dispositif de commutation, l'ensemble de couplage ayant :
un contact d'entrée de courant (22) couplé électriquement à l'au moins une première borne et configuré pour se connecter à un premier contact (7a) de la paire de contacts de l'unité de fusible ; et
un contact de sortie de courant (37a, 37b) couplé électriquement à l'au moins une deuxième borne et configuré pour se connecter à un deuxième contact (7b) de la paire de contacts de l'unité de fusible, pour définir un trajet de circulation de courant à partir du contact d'entrée de courant jusqu'au
contact de sortie de courant à travers le dispositif de commutation ;
**caractérisé en ce que** le dispositif de gestion de courant monophasé comprend en outre un mécanisme de serrage (42, 43) pour serrer les connexions entre le contact d'entrée de courant (22) et le contact de sortie de courant (37a, 37b) et des premier et deuxième contacts respectifs de la paire de contacts de l'unité de fusible.

2. Dispositif de gestion de courant monophasé selon la revendication 1, dans lequel l'ensemble de couplage comprend en outre un support de composant (20, 22, 33) agencé dans le trajet de circulation de courant entre le contact d'entrée de courant et l'au moins une première borne pour maintenir un composant conducteur électrique (15) dans celle-ci, de sorte qu'un courant puisse circuler à partir du contact d'entrée de courant à travers le composant vers le dispositif de commutation via l'au moins une première borne lorsque le composant électriquement conducteur est maintenu dans celle-ci.

3. Dispositif de gestion de courant monophasé selon les revendications 1 ou 2, dans lequel l'ensemble de couplage comporte en outre un premier contact de dispositif de commutation (29, 30a) connecté à l'au moins une première borne et un deuxième contact de dispositif de commutation (41, 30b) connecté à l'au moins une deuxième borne, de sorte que le contact d'entrée de courant, le contact de sortie de courant, l'au moins une première et deuxième bornes, et les premier et deuxième contacts de dispositif de commutation forment le trajet de circulation de courant à partir du contact d'entrée de courant jusqu'au contact de sortie de courant à travers le dispositif de commutation.

4. Dispositif de gestion de courant monophasé selon l'une des revendications précédentes, dans lequel le trajet de circulation de courant comprend une première partie de trajet (57a) entre le contact d'entrée de courant et le premier contact de dispositif de commutation, une deuxième partie de trajet (57b) entre les premier et deuxième contacts de dispositif de commutation à travers le dispositif de commutation, et une troisième partie de trajet (57c) entre le deuxième contact de dispositif de commutation et le contact de sortie de courant, le composant électriquement conducteur étant prévu dans la première partie du trajet de circulation du courant.

5. Dispositif de gestion de courant monophasé selon la revendication 4, dans lequel l'ensemble de couplage comporte un panneau isolant (34) qui isole les première et troisième parties du trajet de courant.

6. Dispositif de gestion de courant monophasé selon l'une des revendications précédentes, dans lequel le contact d'entrée de courant comprend une plaque en forme de Y (22) présentant un évidement (24) dans lequel le premier contact de la paire de contacts peut être reçu et une plaque configurée pour être connectée à une borne du composant électriquement conducteur.

7. Dispositif de gestion de courant monophasé selon l'une des revendications 3 à 5, dans lequel le premier contact de dispositif de commutation comprend un support ayant une plaque configurée pour la connexion à une deuxième borne du composant électriquement conducteur et une bride connectée à l'au moins une première borne.

8. Dispositif de gestion de courant monophasé selon l'une des revendications précédentes, dans lequel le contact de sortie de courant comprend une paire de plaques (37a, 37b) définissant un évidement (37) entre celles-ci et dans lequel le deuxième contact de la paire de contacts peut être reçu.

9. Dispositif de gestion de courant monophasé selon l'une des revendications 3 à 7, dans lequel le deuxième contact de dispositif de commutation comprend une plaque (41) connectée à la paire de plaques, la plaque étant connectée à l'au moins une deuxième borne par un deuxième contact intermédiaire (30b).

10. Dispositif de gestion de courant monophasé selon l'une des revendications précédentes, dans lequel le mécanisme de serrage comporte un ensemble d'entraînement par vis sans fin.

11. Dispositif de gestion de courant monophasé selon l'une des revendications précédentes, dans lequel le dispositif de commutation comporte un actionneur configuré pour actionner le mécanisme de disjonction de circuit, et le dispositif de commutation est configuré pour recevoir un signal de télécommande d'un système de télécommande, l'actionneur étant agencé pour actionner le mécanisme de disjonction de circuit en réponse au signal de télécommande.

12. Dispositif de gestion de courant monophasé selon l'une des revendications précédentes, dans lequel le dispositif de commutation comporte en outre un module de commande (62) configuré pour fournir un signal à l'actionneur pour commander l'actionneur en réponse au signal de télécommande provenant du système de télécommande.

13. Dispositif de gestion de courant monophasé selon la revendication 12, dans lequel le module de commande est configuré pour lancer la gestion de courant en réponse à un deuxième signal de commande provenant du système de télécommande.

14. Dispositif de gestion de courant monophasé selon la revendication 12 ou 13, dans lequel le dispositif de commutation comporte une unité de surveillance de courant (63) configurée pour surveiller la circulation de courant dans le dispositif de commutation et pour transmettre des données indiquant la charge mesurée à un dispositif à télécommande au moyen d'une liaison de données au système de télécommande.
